(19) Europäisches Patentamt
European Patent Office
Office européen des brevets

(11) Publication number: **0 144 299**
**A2**

(12) # EUROPEAN PATENT APPLICATION

(21) Application number: **84850341.3**

(22) Date of filing: **05.11.84**

(51) Int. Cl.⁴: **F 16 B 4/00**

(30) Priority: **23.11.83 SE 8306473**

(43) Date of publication of application:
**12.06.85 Bulletin 85/24**

(84) Designated Contracting States:
**BE DE FR GB NL SE**

(71) Applicant: **AB Rörmekano**
**P.O. Box 83**
**S-792 01 Mora(SE)**

(72) Inventor: **Elgenberg, Bertil**
**Skerivägen 15**
**S-792 00 Mora(SE)**

(74) Representative: **Modin, Jan et al,**
**c/o Axel Ehrners Patentbyra AB Box 5342**
**S-102 46 Stockholm(SE)**

(54) **Structural joint.**

(57) Structural joint between two structural elements of metal, one element (1) of which is provided with an elongate groove (6) and at least one flange tongue (8) extending along one or both edges of the groove, whereas the other structural element (2) is provided with an elongate protuberance (12) fitting into said groove and having a rounded cross-section. The flange tongue (8) is permanently bent around the protuberance to form the joint. In order to obtain improved strength, said one element (1) has a larger material thickness in the region of the bottom portion (6a) of the groove than in the flange tongue.

Fig. 2

EP 0 144 299 A2

STRUCTURAL JOINT

This invention relates to a structural joint for joining two structural elements of metal, one element of which is provided with an elongate groove and at least one flange tongue extending along one edge of the groove, whereas the other structural element is provided with an elongate protuberance fitting into said groove and having a rounded cross-section, wherein the flange tongue is permanently bent around the protuberance to form the structural joint.

Such a structural joint, in particular for ladders, is known from EP-81850144.7 and SE-B-7405925-4. In this case, one or the other side rail constitutes said one element, whereas each respective step forms the other element. For the necessary stability of the ladder, the steps are on each side connected to the side rail by means of two parallel joints. However, when testing the strength of such joints, it has turned out that the effective strength is far below the theoretical one (calculated by multiplying the cross-sectional area with the specific tensile strength of the material), especially when applying a tensile force perpendicularly to the longitudinal direction of the joint.

In EP 81850144.7 it is suggested that the protuberance of the second element should have a homogeneous cross-section, e.g. by inserting a filler element to provide the completed joint with a solid cross-section, wherein the flange tongue is deformed during a cold forming process into intimate contact with the homogeneous protuberance. However, the strength of this kind of joint is also insufficient. Thus, the flange tongue will break (brittle fracture) even in this case upon applying a tensile force which is lower than the theoretically calculated one.

The object of the present invention is to obtain a structural joint of the kind stated above and having an improved strength, especially with regard to tensile forces perpendicular to the longitudinal direction of the joint.

According to the invention, this object is achieved in that the structural element, which is provided with the elongated groove, has a larger material thickness in the bottom portion of the groove than in the flange tongue. Hereby, it is possible to avoid deformation or breakage caused by the fact that the flange tongue is bent out due to insuffient flexural strength of the material in the bottom portion of the groove. Suitably, the material thickness of the flange tongue decreases in the direction towards the free edge of the flange tongue, enabling an optimum use of the material. To obtain the best possible strength, the flange tongue or tongues should surround substantially the entire circumference of the protuberance of the second structural element. In case the structural element consists of an extruded profile element - especially in view of the amount of material and the weight - the profile element should preferably have a larger material thickness in the region of the groove than in the portion at the side thereof, at least at one side.

The invention will be explained further below with reference to the accompanying drawing illustrating some suitable embodiments.

Figs. 1a and 1b show schematically in a perspective view a first and a second structural element to be joined to each other in accordance with the present invention.

Fig.2 shows a completed joint in cross-section;

Fig. 3a,3b,3c illustrate some alternative embodiments of the second structural element; and

Figs. 4a,4b,4c and 4d show various possible embodiments of the first structural element.

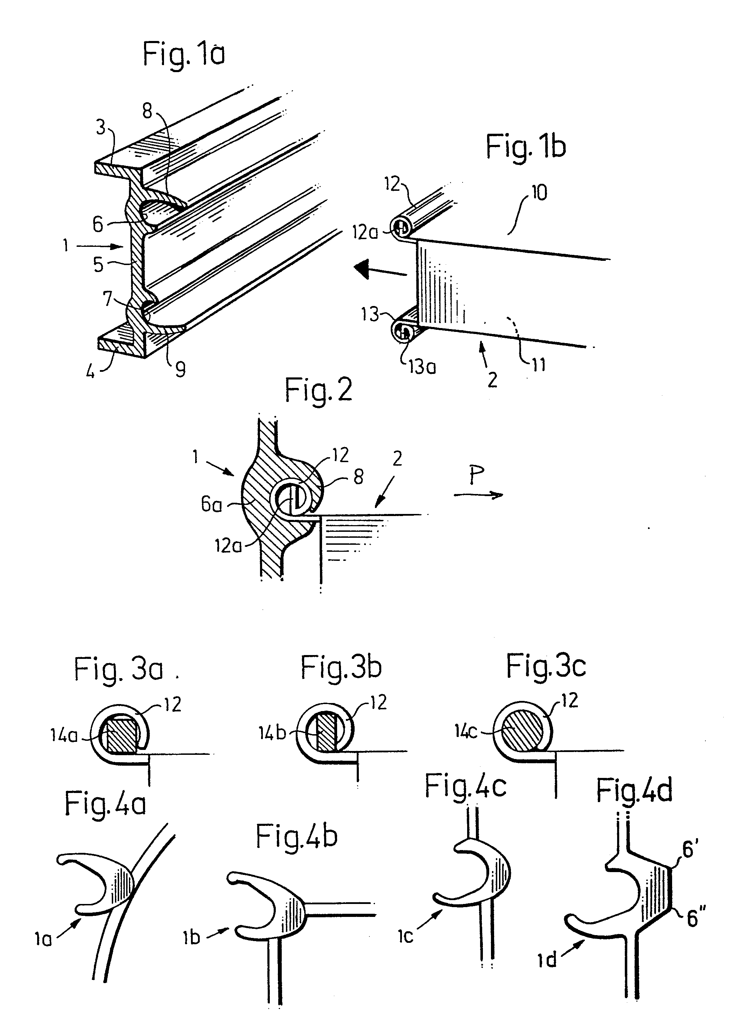

The structural elements shown in Figs. 1a and 1b, which are to be joined to each other, consist of extruded aluminium profiles.

The first structural element 1 may constitute one of the side rails of a ladder, whereas the second structural element 2 constitutes a step. In this embodiment, the element 1 includes two outer flanges 3,4 and a web 5 connecting the same, two longitudinal grooves 6,7 being formed in the web. In the region of these grooves , the web 5 is made thicker, so that the material thickness of the bottom portion of each groove 6 and 7, respectively, is substantially larger than in the adjacent portions. A flange tongue 8 and 9, respectively, is unitarily formed with the web 5 and extends outwardly from the plane of the web on one side of each groove 6 and 7, respectively, before being connected to the second element 2 (the step).

The structural element 2 in Fig.1b consists of a box profile having at two opposite side walls 10,11 a portion 12 and 13, respectively, forming an extension at the end and having been bent into the form of a coil. The outermost end 12a and 12b, respectively, of each portion 12,13 is however straight and forms an inner support intended to prevent the coiled portion or protuberance 12,13 from being deformed during the joint formation.

Joining of the two elements 1,2 is effected by placing the element 2 with its protuberances 12,13 into the grooves 6,7 of the element 1, whereupon the flange tongues 8,9 are bent by rolling so as to engage onto the outside of each protuberance 12,13. By this means, a very strong joint is achieved, the cross-section of which is shown in Fig.2. As apparent, the material thickness is largest in the region of the bottom portion 6a of the groove 6, where the bending moment is greatest upon applying a load to the element 2 striving to pull the protuberance 12 out of the groove (in the direction of the arrow P). The material thickness decreases gradually in the flange tongue 8 whereby the material is used to an optimal extent. Thus, when a pulling load is applied in the direction of the arrow P, the bending stress in the material is approximately the same at all points in the bottom portion 6a and the flange tongue 8.

In order to achieve a sufficient strength in the joint, it is also essential that the protuberance 12 and 13, respectively, of the second structural element 2 is provided with a proper inner support. As alternatives to the embodiment shown in Figs. 1b and 2 consisting of a rectilinearly bent end 12a of the extended portion 12 bent into a coil, the inner support may consist of a separately inserted filler element having a square cross-section (14a in Fig. 3a), a rectangular cross-section (14b in Fig.3b) or a circular cross-section (14c in Fig. 3c), so as to fill out the space entirely or partly inside the coiled protuberance 12.

The structural element 1 can be designed in many different ways for various kinds of use, provided that the features given in the claims are observed. Various examples of cross-sections of profile elements 1a, 1b, 1c and 1d are shown in Figs. 4a,4b,4c and 4d, respectively, wherein the cross-section 1d according to Fig. 4d has a profile adapted to a product with edges 6',6" at the rear of the bottom portion of the groove.

The inventive structural joint may preferably be used in various applications besides ladders, such as beams, frameworks, consoles and similar structures, particularly including extruded metal profile elements.

C L A I M S

1. Structural joint for joining two structural elements
(1,2) of metal, one element (1) of which is provided with
an elongate groove (6,7) and at least one flange tongue (8,9)
extending along one or both edges of the groove, whereas
the other structural element (2) is provided with an elongate
protuberance (12,13) fitting into said groove and having a
rounded cross-section, wherein the flange tongue is permanently bent around the protuberance to form the structural
joint, c h a r a c t e r i z e d  in that said one structural
element (1) has a larger material thickness in the region of
the bottom portion (6a) of the groove than in said flange
tongue (8).

2. Structural joint as defined in claim 1, c h a r a c t e -
r i z e d  in that the material thickness of the flange
tongue (8) decreases in the direction towards the free edge
of the flange tongue.

3. Structural joint as defined in claim 1 or 2, c h a r a c -
t e r i z e d  in that the flange tongue (8) or tongues
encloses substantially the whole circumference of said protuberance (12).

4. Structural joint as defined in anyone of claims 1-3,
wherein said one element is constituted by an extruded
profile element (1), c h a r a c t e r i z e d  in that the pro-
file element has a larger material thickness in the region of
the groove (6a) than at the side thereof, at least at one
side.

------

$^{1}/_{1}$

0144299

## Fig. 1a

## Fig. 1b

## Fig. 2

## Fig. 3a

## Fig. 3b

## Fig. 3c

## Fig. 4a

## Fig. 4b

## Fig. 4c

## Fig. 4d